Europäisches Patentamt

(19) European Patent Office (11) Publication number: **0 133 290**

Office européen des brevets **B1**

(12) **EUROPEAN PATENT SPECIFICATION**

(45) Date of publication of patent specification: 06.07.88 (51) Int. Cl.⁴: **H 01 G 4/38**

(21) Application number: **84108815.6**

(22) Date of filing: **25.07.84**

(54) Method for making one-piece capacitive circuits.

(30) Priority: **29.07.83 IT 4572283**

(43) Date of publication of application:
**20.02.85 Bulletin 85/08**

(45) Publication of the grant of the patent:
**06.07.88 Bulletin 88/27**

(84) Designated Contracting States:
**AT BE CH DE FR GB IT LI LU NL SE**

(56) References cited:
**FR-A- 903 040**
**FR-A-2 496 970**

(73) Proprietor: **ZANUSSI ELETTROMECCANICA
S.p.A.
Via Giardini Cattaneo 3
I-33170 Pordenone-C.P. 147 (IT)**

(72) Inventor: **ZANVETTOR, Sergio
via di Sopra 54
I-32010 Ospitale di Cadore
Belluno (IT)**
Inventor: **DE COL, Lucia
via Cadore 31
I-32014 Ponte nelle Alpi
Belluno (IT)**
Inventor: **DE FAVERI, Americo
via Campelli
I-32013 Longarone
Belluno (IT)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

Courier Press, Leamington Spa, England.

## Description

The present invention relates to an improved method for making one-piece capacitive circuits employing dielectric strips provided with metal layers.

From FR—A—903040 there is known a method according to the prior art portion of Claim 1.

A particularly advantageous method for making one-piece capacitive circuits is described in Italian Patent Application No. 45735 A/82, filed on Nov. 16, 1982 in the name of the present Applicant, and corresponding to EP—A—0 109 090, filed on Nov. 15, 1983 which falls under Art 54(3) EPC. According to this method, at least one first metal layer and at least one second metal layer partially overlapping one another and electrically insulated from each other are longitudinally wound upon one another for a certain number of windings. For each winding at least one of said metal layers is formed with at least two transversely extending interruptions at positions resulting in said interruptions being radially aligned with one another in the finished coil, so as to define a number of individual capacities within said coil.

The capacitive circuit is subsequently finished by applying, for instance by spray-depositing a contact metal layer, respective terminals to mutually adjacent armatures at the end faces of the thus obtained coil. It is therefore practically impossible, or at least excessively laborious, to apply respective terminals to all of the desired armatures in the case in which the thus formed capacitive circuit includes a number of capacitors having a common armature which is not exposed at one of the end faces of the coil. In any case, and in contrast to what would be desirable, it is relatively difficult to form the transversely extending interruptions at correct positions prior to the metal layers being wound upon one another, as the longitudinal spacing between adjacent interruptions varies progressively with the radius of the windings. It is therefore preferred to form the interruptions during the winding process by the employ of thermoelectric evaporation electrodes which have to be controlled with very high precision, whereby the equipment employed for manufacturing the capacitive circuits is rendered rather complicated.

It is therefore the object of the present invention to provide an improved method for making one-piece capacitive circuits of any desired electrical configuration, which method should be capable of being implemented in a simple and versatile manner and of being automatized without requiring the employ of highly complex equipment.

According to the invention, this object is attained by a method for making one-piece multi-capacitive circuits, wherein a dielectric strip provided on respective faces with at least a first and a second metal layer superimposed upon one another is folded onto itself with alternating folds, at least one of said metal layers being formed with at least a longitudinally extending interruption. The method is characterised in that said at least one of the metal layers is formed with a plurality of substantially transversely extending interruptions, said folds of said strip are positioned in such a manner that the interruptions of the superimposed metal layers are aligned with one another in laterally spaced groups and the thus folded strip is subsequently cut along planes passing through the aligned interruptions of selected groups thereof, so as to separate from one another a number of individual one-piece capacitive circuits.

The characteristics and advantages of the invention will become more clearly evident from the following description, given by way of a nonlimiting example with reference to the accompanying drawings, wherein:

fig. 1 shows a diagrammatical cross-sectional view of a metallized strip preferably used for making the capacitive circuits by the method according to the invention,

figs. 2 to 4 show successive phases in carrying out the method according to the invention for making a one-piece capacitive circuit,

fig. 5 shows a circuit diagram of the capacitive circuit of fig. 4,

fig. 6 shows a cross-sectional view corresponding to fig. 1 of another embodiment of a metallized strip,

figs. 7 and 8 show successive phases of the method according to the invention for making a one-piece capacitive circuit employing the metallized strip shown in fig. 6, and

fig. 9 shows a circuit diagram of the capacitive circuit shown in fig. 8.

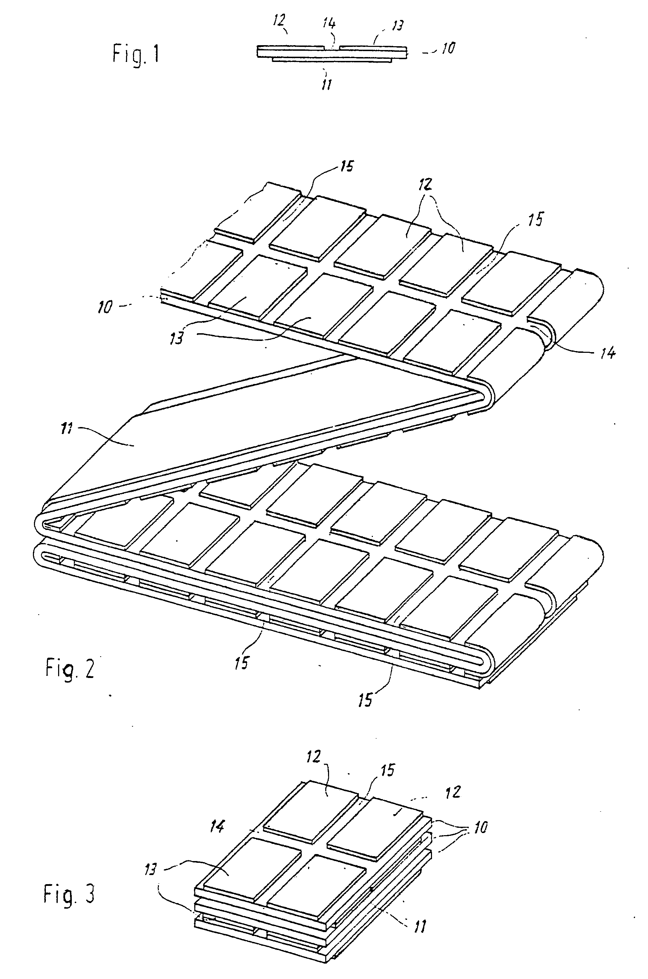

With reference to fig. 1, the method according to the invention is advantageously carried out with the employ of a dielectric strip 10 (preferably made of impregnated paper) provided with a metal layer on both of its faces. In the embodiment shown in fig. 1, one side of strip 10 carries a central metal layer 11 which leaves the longitudinal edge portions of the strip free, while the other face carries two metal layers 12 and 13 extending to the longitudinal edges of strip 10 and separated from one another by a non-metallized center portion 14.

As shown in fig. 2, the thus metallized strip 10 is repititevely folded onto itself by alternating folds in a per se known manner. It is noted that this folding step is carried out without the interposition of additional insulating layers, so that the thickness of the respective metal layers 11 and 12, 13 is effectively doubled at each fold. For obtaining a good autoregenerating effect in the finished product, is is therefore advisable to employ metal layers having substantially twice the resistivity with respect to the conventional values (i.e. 4 to 8 $\Omega$/sq).

Preferably prior to the folding operation, at least one of the metal layers 11 and 12, 13 is formed with a plurality of substantially transversely extending interruptions 15. In the embodiment shown, transverse interruptions 15 are formed in the two side-by-side metal layers 12 and 13 at regular intervals by the employ of any suitable apparatus.

As an alternative, transverse interruptions 15 may be formed simultaneously with the folding process by the employ for instance of apparatus described in the above quoted Italian and European Patent Applications, respectively. In each case the alternating folds of the metallized strip are formed at locations resulting in the transverse interruptions of each of the superimposed metal layers of the strip being aligned with each other in laterally adjacent groups. At this point the metallized strip assumes a compact multi-layered configuration which may be readily separated into a plurality of individual one-piece capacitive circuits.

To this purpose the structure shown in fig. 2 may be readily cut, as by milling or the like, along planes passing through any of the groups of aligned interruptions 15, care having to be taken that at least one group of aligned interruptions 15 remains undisturbed between successive cuts.

In the preferred embodiment described, a cut is carried out along every second group of aligned interruptions 15, so as to obtain a number of one-piece capacitive circuits of the type shown in fig. 3.

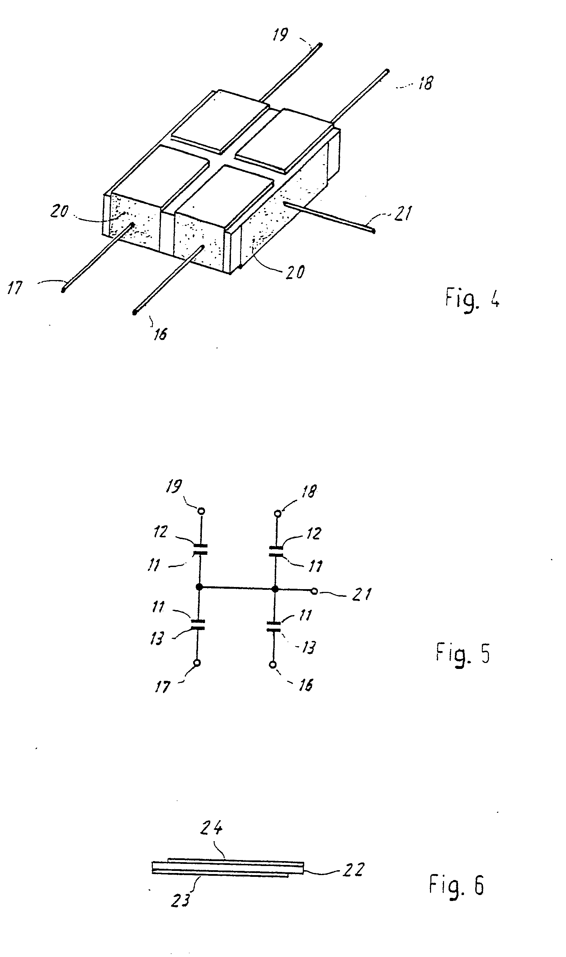

As noted in this figure, the metal layer 11, which does not extend to the front and rear faces of the thus formed circuit, is exposed along the cut face of the circuit, whereby this metal layer 11 may be readily connected, as by means of a contact metal 20 deposited thereon, to a respective terminal 21, as shown in fig. 4. In an analogous manner, terminals 16, 17, 18, and 19 may be connected to the respective partial capacities adjacent the front and rear faces of the one-piece circuit after the respective faces have been suitably masked, so as to obtain a capacitive circuit the circuit diagram of which is shown in fig. 5. In particular, the partial capacities have a common armature consisting of the continuous metal layer 11 of the original strip and provided with a terminal 21 as already explained.

From the above it is evident that the method according to the invention is capable of being carried out in a simple manner and readily lends itself to automatization. In addition, this method is applicable to the manufacture of compact one-piece capacitive circuits having various configurations, depending on the characteristics of the metallized strip used as the starting material, on the geometric location of the interruptions 15 (on one or more of the metal layers 11, 12 and 13), on the positions whereat the folded strip is cut, and on the location and connection of the terminals.

Another appreciable advantage results from the already mentioned fact that on folding the double-faced metallized strip onto itself, each of the metal layers 11, 12 and 13 is brought into surface contact with itself. In such a manner, if one of the metallized areas gives rise to a short-circuit, with the resultant autoregeneration phenomenon taking place, the area of the armature damaged by this phenomenen is particularly reduced. As a matter of fact, the metal layer superimposed on the one affected by the autoregeneration phenomenon, being substantially insulated therefrom by a layer of air, is only damaged to a negligible extent. In any event, possible short-circuits in the capacitive circuits obtained by the method according to the invention will not result in substantial variations of the capacitive values.

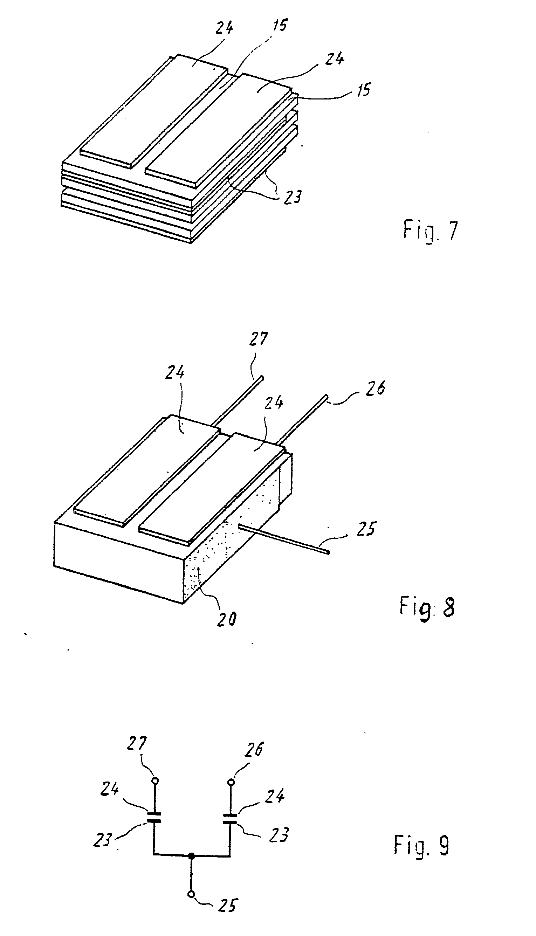

As already indicated, the method according to the invention is advantageously applied also to the employ of a dielectric strip 22 provided on opposite sides with one metal layer 23 and 24, respectively, each of which leaves an opposite longitudinal edge portion of strip 22 uncovered, as shown in fig. 6.

By forming metal layer 24 with interruptions 15, folding the strip onto itself as shown in fig. 2, and cutting the thus obtained structure in the manner previously described, one obtains a plurality of capacitive circuits of the type shown in figs. 7 to 9. In this structure, metal layer 23 is exposed not only on one end face of the circuit, but also along the lateral cut faces, permitting a suitable terminal 25 to be secured, as by means of a contact metal deposit 20, to any one of three faces of the capacitive circuit as required in any particular case.

Further terminals 26 and 27, respectively, may be secured in a conventional manner (with suitable masking) to the metal layer 24, so as to obtain the capacitive circuit shown in fig. 9.

The thus obtained capacitive circuit may of course be completed by coating it with an insulating resin or a similar protective covering, while the described method for its manufacture may be modified in any suitable manner by combining any of the various possible solutions with one another within the scope of the caracteristics claimed herein.

## Claim

A method for making one-piece multi-capacitive circuits, wherein a dielectric strip (10; 22) provided on respective faces with at least a first and at least a second metal layer (11, 12, 13; 23, 24) superimposed upon one another is folded onto itself with alternating folds, at least one (12; 24) of said metal layers being formed with at least a longitudinally extending interruption (14), caracterised in that said at least one (12; 24) of said metal layers is formed with a plurality of substantially transversely extending interruptions (15), said folds of said strip (10; 22) are positioned in such a manner that the transverse interruptions (15) of the superimposed metal layers (12, 13; 23, 24) are aligned with respect to one another in laterally spaced groups and the thus folded strip (10) is subsequently cut along planes passing through the aligned transverse interruptions (15) of selected groups thereof, so as to separate from one another a number of individual multi-capacitive circuits.

**Anspruch**

Verfahren zum Herstellen von einstückigen, kapazitiven Mehrfachschaltungen, bei dem ein dielektrischer Streifen (10; 22), der auf seinen jeweiligen Seiten mit wenigstens einer ersten und wenigstens einer zweiten Metallschicht (11, 12, 13; 23, 24) versehen ist, die übereinander angeordnet sind, mit abwechselnden Falten auf sich selbst gefaltet wird, wobei wenigstens eine (12; 24) der genannten Metallschichten mit wenigstens einer sich in Längsrichtung erstreckenden Unterbrechung (14) ausgebildet ist, dadurch gekennzeichnet, daß die genannte wenigstens eine (12; 24) der genannten Metallschichten mit einer Vielzahl von sich im wesentlichen quer erstreckenden Unterbrechungen (15) ausgebildet wird, die genannten Falten des genannten Streifens (10; 22) positioniert werden derart, daß die Querunterbrechungen (15) der übereinander angeordneten Metallschichten (12, 13; 23, 24) in bezug auf einander in seitlich beabstandete Gruppen ausgerichtet werden und dann der derart gefaltete Streifen (10) längs Ebenen geschnitten wird, die durch die ausgerichteten Querunterbrechungen (15) von ausgewählten Gruppen verlaufen, so daß eine Anzahl von einzelnen kapazitiven Mehrfachschaltungen von einander getrennt werden.

**Revendication**

Procédé pour fabriquer des circuits-multi-capacitifs monoblocs, dans lequel une bande diélectrique (10; 22) revêtue sur ses faces respectives d'au moins une première et d'au moins une deuxième couche métallique (11, 12, 13; 23, 24); superposées l'une sur l'autre, est repliée sur elle-même avec des plis alternés, au moins l'une (12; 24) de ces couches métalliques étant formée avec au moins une interruption longitudinale (14), caractérisé en ce que la ou lesdites couches métalliques (12; 24) comportant au moins une interruption longitudinale (14) comportent une multiplicité d'interruptions pratiquement transversales (15), en ce que les plis de la bande (10; 22) sont disposés de telle manière que les interruptions transversales (15) des couches métalliques superposées (12, 13; 23, 24) sont alignées l'une avec l'autre en des groupes latéralement espacés et en ce que la bande ainsi repliée (10) est ensuite coupée selon des plans passant à travers des interruptions transversales alignées (15) de groupes sélectionnés de cette bande, de façon à séparer les uns des autres un certain nombre de circuits multi-capacitifs individuels.

Fig. 1

12   14   13   10

11

15   12   15

10

13   14

11

15   15

15

Fig. 2

12   15   12

14   10

13

11

Fig. 3

Fig. 4

Fig. 5

Fig. 6

Fig. 7

Fig. 8

Fig. 9